(19) **Europäisches Patentamt**
**European Patent Office**
**Office européen des brevets**

(11) **EP 2 748 385 B1**

(12) **FASCICULE DE BREVET EUROPEEN**

(45) Date de publication et mention de la délivrance du brevet:
**03.06.2015 Bulletin 2015/23**

(21) Numéro de dépôt: **12758570.1**

(22) Date de dépôt: **20.08.2012**

(51) Int Cl.:
*E04B 1/88* (2006.01)     *E04C 2/24* (2006.01)
*B32B 5/18* (2006.01)     *B32B 7/14* (2006.01)
*B32B 5/02* (2006.01)     *B32B 17/02* (2006.01)
*E04B 1/84* (2006.01)     *G10K 11/168* (2006.01)

(86) Numéro de dépôt international:
**PCT/FR2012/051910**

(87) Numéro de publication internationale:
**WO 2013/026983 (28.02.2013 Gazette 2013/09)**

(54) **REVÊTEMENT MURAL POUR CONFORT THERMIQUE ET ACOUSTIQUE**

WANDVERKLEIDUNG FÜR WÄRME- UND GERÄUSCHCOMFORT

WALL CLADDING FOR THERMAL AND ACOUSTIC COMFORT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.08.2011 FR 1157516**

(43) Date de publication de la demande:
**02.07.2014 Bulletin 2014/27**

(73) Titulaire: **Saint-Gobain Adfors**
**73000 Chambéry (FR)**

(72) Inventeurs:
• **BLANCHARD, Benjamin**
**F-95150 Taverny (FR)**

• **CHUDA, Katarzyna**
**F-94800 Villejuif (FR)**

(74) Mandataire: **Pöpping, Barbara**
**Saint-Gobain Recherche**
**Département Propriété Industrielle**
**39 Quai Lucien Lefranc**
**93300 Aubervilliers (FR)**

(56) Documents cités:
**FR-A1- 2 768 448     FR-A1- 2 932 499**
**FR-A3- 2 803 860     US-A1- 2004 002 274**

**Description**

La présente invention concerne un revêtement mural multi-couches à peindre comprenant un textile de verre collé sur un support à porosité ouverte et qui, à l'état peint, présente à la fois un pouvoir d'absorption acoustique significatif et une faible effusivité et diffusivité thermiques. Elle concerne également un procédé de fabrication d'un tel revêtement et son utilisation pour améliorer à la fois le confort acoustique et le confort thermique d'une pièce ou d'un bâtiment.

La notion de « confort acoustique », comme l'idée de confort en général, est une notion assez subjective. On s'accord toutefois généralement à définir un bon confort acoustique par une bonne intelligibilité des sons tels que les voix humaines ou la musique, un temps de réverbération ni trop court pour éviter l'impression de sons étouffés, ni trop long pour éviter un écho résiduel trop marqué, et l'absence de sons à puissance sonore excessive. La qualité du confort acoustique est principalement gouvernée par l'atténuation des sons au moyen de matériaux absorbants acoustiques, fixés par exemple aux murs et/ou au sol.

Il est important de distinguer le confort acoustique de l'isolation acoustique. Lorsqu'un son rencontre un obstacle, tel qu'une paroi d'un bâtiment, une partie de l'énergie sonore incidente est réfléchie, une autre est absorbée et une troisième est transmise par l'obstacle. L'isolation acoustique a pour but de réduire la transmission du son, alors que l'objectif de l'amélioration du confort acoustique est la réduction et l'optimisation de la composante réfléchie du son.

Les deux paramètres les plus utilisés pour évaluer la qualité de confort acoustique sont le temps de réverbération et le coefficient d'absorption acoustique, également appelé indice alpha Sabine ($\alpha_w$). Ce dernier est défini comme le rapport de l'énergie acoustique absorbée par un matériau donné à l'énergie acoustique incidente ($E_a/E_i$). L'indice alpha Sabine est déterminé par des mesures en champ diffus réalisées selon la norme NF EN ISO 354 (Mesurage de l'absorption acoustique en salle réverbérante) et est calculé conformément à la norme NF EN ISO 11654 (Absorbants pour l'utilisation dans les bâtiments - Evaluation de l'absorption acoustique).

A partir du coefficient d'absorption acoustique obtenu en champ diffus, on définit différentes classes de performance, décrites dans la norme NF EN ISO 11654.

De manière générale, un matériau ou revêtement absorbant acoustique présentant une nature chimique et une structure poreuse donnée absorbe d'autant plus efficacement le son qu'il est épais, autrement dit, son indice $\alpha_w$ augmente avec l'épaisseur. Pour des raisons faciles à comprendre, il n'est toutefois pas souhaitable de commercialiser des revêtements muraux présentant une épaisseur excessive. Ils nécessiteraient des capacités de stockage et de transport importantes et leur pose par des particuliers serait difficile. Une épaisseur excessive, par exemple au-delà d'environ 1 cm, poserait également des problèmes esthétiques en particulier dans le domaine de l'habitat des particuliers.

Un autre problème des revêtements muraux absorbants acoustiques est leur aspect de surface. Les meilleures propriétés d'absorption acoustique sont généralement obtenues avec des revêtements ayant une couche de surface poreuse, très perméable à l'air et donc au son. De telles couches de surface poreuses ne sont toutefois pas toujours satisfaisantes d'un point de vue esthétique, en particulier elles ne sont généralement pas destinées à être peintes, et lorsqu'elles peuvent être recouvertes d'une couche de peinture, leur pouvoir d'absorption acoustique diminue drastiquement.

Le confort thermique d'une pièce ou d'un bâtiment, contrairement à ce qu'on pourrait penser, ne se résume pas à une température d'air agréable. Il existe deux normes définissant le confort thermique, à savoir la norme ISO7730 et la norme ISO1525. Ces deux normes définissent une température opérative, également appelée parfois température perçue, qui est l'équivalent d'une moyenne pondérée entre la température de l'air et la température radiative (température des parois de la pièce). La température opérative est définie par la formule suivante :

$$T_{opérative} = \alpha \times T_{air} + (1 - \alpha) \times T_{radiative}$$

où le coefficient $\alpha$ représente la contribution thermique apportée par convection. Sa valeur est généralement comprise entre 0,4 et 0,5, ce qui signifie que la température radiative contribue autant, sinon plus, au confort thermique d'une pièce que la température de l'air.

La température radiative (température à la surface des parois d'une pièce) dépend de deux paramètres : l'effusivité thermique et la diffusivité thermique.

L'effusivité thermique (*b*) définie par la formule $b = \sqrt{\lambda \rho Cp}$ où

$\lambda$ est la conductivité thermique du matériau (exprimée en W.m$^{-1}$.K$^{-1}$),
p est la masse volumique du matériau (en kg/m$^{-3}$) et
Cp est la capacité thermique massique du matériau (en J.kg$^{-1}$.K$^{-1}$)

caractérise la capacité d'un matériau à échanger, par sa surface, de l'énergie thermique avec son environnement. La diffusivité thermique (a) définie par la formule $a = \dfrac{\lambda}{\rho Cp}$

où $\lambda$, p et $C_p$ ont la même signification que ci-dessus,

caractérise la rapidité d'un déplacement des calories à travers la masse d'un matériau.

Dans les périodes de chauffage ou de refroidissement d'une pièce par des méthodes conventionnelles, la température de l'air change considérablement plus vite que la température radiative. Une amélioration du confort thermique consisterait par exemple à réduire cette inertie thermique des parois, autrement dit à rapprocher le comportement thermique des parois de celui de l'air, ce qui s'obtient grâce à une réduction des valeurs d'effusivité et de diffusivité thermique.

La présente invention a pour but de proposer un revêtement mural à peindre présentant à la fois une faible effusivité et diffusivité thermique et, même à l'état peint, un coefficient d'absorption acoustique permettant sa classification en tant que revêtement absorbant acoustique selon la norme NF EN ISO 11654, au moins dans la classe E ($\alpha_w = 0{,}15$ à 0,25), et dont l'épaisseur globale ne dépasse pas 3 mm.

Le revêtement mural de la présente invention doit ainsi contribuer de façon significative au confort thermique d'une pièce et allier de bonnes propriétés d'absorption acoustique et un aspect esthétique satisfaisant, le plus proche possible des revêtements muraux à peindre commercialisés, tels que les revêtements à base de toile en fibres de verre.

Un certain nombre de documents décrivent des revêtements muraux multi-couches isolants acoustiques et/ou thermiques.

Ainsi, la demande CH 650 196 décrit un revêtement mural multi-couches comprenant un support de mousse à porosité ouverte renfermant des charges et des composants ignifugeants, et une couche de surface textile, par exemple en polyester. Entre les deux couches est insérée une feuille d'aluminium perforée, destinée à améliorer la résistance au feu du revêtement.

La demande FR 2 672 908 décrit un revêtement mural multi-couches dans lequel une couche de tissu est collée au moyen d'un film continu thermocollant sur un support en mousse, lequel support en mousse est à son tour collé au moyen d'un deuxième film continu thermocollant sur une sous-couche.

De façon similaire, FR 0 061 369 divulgue un revêtement mural dans lequel un textile en polymère synthétique est collé au moyen d'un film continu thermocollant en polyéthylène sur une nappe de mousse à porosité ouverte.

EP 0 271 681 divulgue un revêtement mural absorbant acoustique dans lequel une couche de papier ou de tissu perméable à l'air est collée sur une structure d'écartement, par exemple un textile, du carton perforé ou une grille de matière plastique. La structure d'écartement couverte de tissu est à son tour collée sur une structure poreuse absorbante acoustique.

Le brevet US 5 681 408 décrit un revêtement mural multicouches absorbant acoustique où deux textiles relativement lâches sont collés l'un contre l'autre au moyen d'un film en polyéthylène.

Le brevet US 4 283 457 décrit un revêtement mural absorbant acoustique dans lequel un feutre aiguilleté en fibres de verre est collé au moyen d'une colle réactive sur une mousse de polyuréthanne à porosité ouverte. Le matériau est décrit comme présentant de bonnes propriétés d'absorption acoustique, mais ces propriétés sont obtenues sur un revêtement très épais, présentant une épaisseur comprise entre un et deux centimètres, et à l'état non peint. Le feutre aiguilleté en fibres de verre formant la couche de surface de ce revêtement ne se prête pas ou très mal à l'application d'une peinture acrylique ou glycérophtalique.

Aucun de ces documents ne divulgue un revêtement à base de textile de verre présentant, à faible épaisseur et à l'état peint, à la fois un coefficient d'absorption acoustique ($\alpha_w$) supérieur ou égal à 0,15 permettant un classement en tant qu'absorbant acoustique selon la norme NF EN ISO 11654, et une effusivité thermique inférieure à 390 $W/(m^2.K.s^{1/2})$.

La Demanderesse, après de nombreux essais d'absorption acoustique en champ diffus sur des revêtements muraux peints ou non peints, à base d'un textile de verre collé sur des supports en mousse ou molleton, a réussi à dégager les tendances suivantes :

Le textile de verre qui sera en contact avec la peinture ou avec l'atmosphère de la pièce doit avoir une perméabilité à l'air comprise dans une certaine gamme. La perméabilité à l'air doit être suffisante pour que le son puisse pénétrer dans la couche sous-jacente, mais ne doit pas excéder une valeur au-delà de laquelle le matériau aurait un aspect insatisfaisant à l'état peint.

La couche adhésive fixant le textile de verre sur le support ne doit pas boucher tous les pores superficiels du support, autrement dit elle doit laisser libres des zones microscopiques où le son ayant traversé la couche de surface puisse pénétrer dans la couche sous-jacente pour y être absorbé. La quantité de colle doit toutefois être suffisante pour permettre une bonne fixation du textile de verre au support, faute de quoi le coefficient d'absorption acoustique diminue.

Lorsque le support du revêtement est une mousse, la porosité ouverte de la mousse doit être la plus élevée possible. C'est en effet au niveau de l'interface entre les parois de la mousse et l'air au coeur de la mousse que le son est absorbé. Plus l'étendue de cette interface accessible au son est importante, meilleur sera le coefficient d'absorption acoustique.

Lorsque le support du revêtement est un non tissé, il s'agit avantageusement d'un non tissé en fibres de viscose ayant une masse surfacique comprise entre 150 g/m² et 500 g/m².

La Demanderesse a ainsi constaté qu'en optimisant les paramètres ci-dessus (perméabilité à l'air du textile de verre en surface, structure de la couche adhésive et porosité du support en mousse ou masse surfacique du support non tissé) il était possible d'obtenir des revêtements muraux de très faible épaisseur présentant, à l'état peint, un indice $\alpha_w$, déterminé selon NF EN ISO 354 et NF EN ISO 11654, supérieur ou égal à 0,15, et qui en même temps permettaient de réduire de façon considérable l'effusivité et la diffusivité de murs constitués de matériaux de constructions classiques tels que le plâtre et le béton.

La présente invention a par conséquent pour objet une structure multi-couches, d'une épaisseur globale comprise entre 1,5 et 3,3 mm, de préférence entre 1,7 et 3,0 mm, destinée à être utilisée en tant que revêtement de murs, de plafonds ou de sols, comprenant

    (a) une couche de support formée par une mousse de polymère organique présentant une porosité ouverte comprise entre 0,50 et 0,995, ou par un non-tissé en fibres de viscose ayant une masse surfacique comprise entre 150 g/m² et 500 g/m²,

    (b) une couche de surface formée par un textile de verre, présentant une résistance statique au passage de l'air, mesurée selon la norme ISO 9053, comprise entre $10^5$ N.s.m$^{-4}$ et $10^6$ N.s.m$^{-4}$, de préférence entre $5.10^5$ N.s.m$^{-4}$ et $8,5.10^5$ N.s.m$^{-4}$, en particulier entre $7.10^5$ N.s.m$^{-4}$ et $8.10^5$ N.s.m$^{-4}$,

    (c) à l'interface entre la couche de support (a) et la couche de surface (b), une couche adhésive discontinue présentant une masse surfacique comprise entre 17 et 60 g/m².

Dans la présente invention, les trois couches (a), (b) et (c) sont contigües les unes aux autres, autrement dit la couche adhésive (c) fixe la couche de surface (b) directement à la couche de support en mousse (a), sans qu'aucune autre couche (par exemple feuille d'aluminium, couche de renfort ou couche d'écartement) ne soit présente entre la couche (a) et la couche (b).

Les valeurs de résistance statique au passage de l'air ci-dessus sont celles mesurées pour le textile de verre à l'état non peint et, bien entendu, avant collage sur la couche de support.

La mousse formant la couche (a) d'un mode de réalisation du revêtement multi-couches de la présente invention est une mousse souple et élastique, à porosité ouverte, c'est-à-dire une mousse où toutes les cellules, ou presque, sont en communication les unes avec les autres. La mesure de cette porosité ouverte ne faisant pas l'objet de normes, la méthode qui a été utilisée pour caractériser les mousses de la couche de support (a) est basée sur celle décrite dans l'article de L.L. Beranek dans « Acoustic impedance of porous materials ». J. Acoust. Soc. Am. 13 :248 - 260, 1942.

La porosité ouverte des mousses utilisées pour la couche de support (a) est de préférence comprise entre 0,80 et 0,97, en particulier entre 0,83 et 0,96, et encore plus particulièrement entre 0,87 et 0,95.

On peut citer à titre d'exemples de telles mousses celles à base de polyuréthanne, notamment de poly(ester uréthanne), de néoprène, de silicone, de polyéthylène, de latex SBR et de mélamine.

Dans un mode de réalisation préféré, les mousses utilisées sont des agglomérés formés à partir de particules de mousse issues du recyclage et agglomérées par exemple au moyen d'un liant ou par simple chauffage sous pression.

La mousse formant la couche de support (a) présente de préférence une masse volumique comprise entre 10 et 120 kg/m³, en particulier entre 30 et 100 kg/m³ et plus préférentiellement entre 50 et 90 kg/m³.

Sa résistance statique au passage de l'air, mesurée selon la norme ISO 9053, est avantageusement comprise entre 13 000 et 50 000 N.s.m$^{-4}$, de préférence entre 13 000 N.s.m$^{-4}$ et 20 000 N.s.m$^{-4}$, en particulier entre 14 000 et 18 000 N.s.m$^{-4}$.

De telles mousses sont disponibles sur le marché, en différentes épaisseurs, sous les dénominations Agglo80 (mousse de polyuréthanne aggloméré commercialisée par la société Carpenter), LM 2033, SKT 2537 et HYPORE 30 FR (mousses de polyuréthanne commercialisées par la société Foam Partner), Basotech 3012 (mousse de mélamine commercialisée par la société Foam Partner) et Resorbson BS (mousse de mélamine commercialisée par la société Pinta Enac).

La mousse utilisée pour la présente invention aura une épaisseur comprise entre 1,5 et 2,5 mm, avant incorporation dans la structure multicouche. Du fait de son élasticité, elle conservera essentiellement cette épaisseur après collage du textile de verre et d'une éventuelle sous-couche.

Dans un autre mode de réalisation, la couche de support (a) du complexe multicouches de la présente invention est non pas une mousse, mais un non-tissé à base de fibres de viscose. Ce non tissé présente, comme déjà indiqué ci-avant, une masse surfacique comprise entre 150 g/m² et 500 g/m², de préférence entre 200 et 400 g/m², et en particulier entre 200 et 300 g/m².

Ce non-tissé peut, éventuellement, contenir une fraction minoritaire de fibres synthétiques. Dans ce cas, il contient au moins 75 % en poids, de préférence au moins 80 % en poids, en particulier au moins 90 % en poids de fibres de viscose, et au plus 25 % en poids, de préférence au plus 20 % en poids, et en particulier au plus 10 % en poids de fibres synthétiques, ces pourcentages étant rapportés à la somme des fibres de viscose et des fibres synthétiques.

Les fibres de viscose sont avantageusement des fibres très fines, présentant une masse linéique comprise entre 1 et 20 dtex, de préférence entre 2 et 10 dtex et en particulier entre 3 et 8 dtex. Les fibres de viscose sont des fibres courtes (fibranne) présentant des longueurs comprises entre 1 et 50 mm, de préférence entre 5 et 40 mm et en particulier entre 10 et 30 mm.

Les fibres synthétiques, éventuellement présentes à raison d'au plus 25 % en poids, sont généralement des fibres en polymère thermoplastique choisies de préférence parmi les fibres de polyoléfines, telles que les fibres de polypropylène, et les fibres de polyester. La masse linéique des fibres synthétiques n'est de préférence pas très différente de celles des fibres de viscose et est comprise avantageusement entre 1 et 30 dtex, de préférence entre 2 et 20 dtex et en particulier entre 3 et 10 dtex. La longueur des fibres synthétiques est comprise dans les mêmes fourchettes que celles indiquées ci-dessus pour les fibres de viscose.

Comme déjà expliqué en introduction, il est essentiel dans la présente invention que la couche adhésive au niveau de l'interface entre les couches (a) et (b) ne soit pas une couche continue, formée par exemple par insertion d'un film adhésif, comme par exemple dans FR 2 672 908, US 5 681 408 ou FR 0 061 369.

La couche adhésive (c) doit coller fermement le textile de verre (b) au support (a), tout en laissant ouverts un maximum de pores situés à l'interface entre les couches (a) et (b). Il est malheureusement très difficile, voire impossible, de quantifier précisément la proportion de pores superficiels fermés ou ouverts dans le produit fini.

Afin d'arriver à des résultats acoustiques satisfaisants, il est nécessaire de respecter certaines quantités d'application par unité de surface et de ne pas déposer l'adhésif sous forme de film ou de couche continus. L'adhésif doit être déposé de manière à couvrir de façon assez homogène, à l'échelle macroscopique, toute l'étendue de l'interface, mais on veillera à ce qu'à l'échelle microscopique seules certaines zones soient couvertes d'adhésif et d'autres restent vides. Une telle application « discontinue » peut se faire par exemple en utilisant un adhésif thermofusible (*hot melt adhesive)* sous forme de voile ou de grille solide à température ambiante que l'on insère entre le support en mousse ou le non-tissé en viscose, et le tissu de verre avant de soumettre l'ensemble à un chauffage sous pression à une température supérieure à la température de ramollissement ou de fusion de l'adhésif. On peut également envisager l'application de l'adhésif sous forme d'une poudre d'adhésif thermofusible sur le non-tissé en viscose ou le support en mousse d'une part (couche (a)) et/ou sur le textile de verre (couche (b)) d'autre part, puis application de la deuxième couche (b) ou (a) et chauffage sous pression.

La nature chimique de l'adhésif thermofusible n'est pas déterminante pour la présente invention et on pourra utiliser les adhésifs thermofusibles classiques à base de polyuréthannes, de copolyamide (coPA) ou de copolymères de PET (coPET), comme par exemple le produit Texiron 9D8 fourni par la société Protechnic.

Enfin, l'adhésif n'est pas forcément un adhésif thermofusible mais peut être une composition liquide d'un adhésif réactif ou thermodurcissable que l'on applique par exemple par impression sur l'un des deux composants à coller en veillant à ce que la composition adhésive ne forme pas un film ou une couche continue.

L'application en mode « discontinu » décrit ci-dessus ne donnera toutefois de bons résultats acoustiques que si l'on respecte également les quantités d'application spécifiées ci-avant, comprises entre 17 et 60 g/m$^2$, de préférence entre 20 et 40 g/m$^2$, en particulier entre 21 et 30 g/m$^2$, et idéalement entre 22 et 27 g/m$^2$. En effet, si les quantités d'adhésif appliquées sont significativement supérieures à 60 g/m$^2$ de surface, l'adhésif thermofusible risque de s'étaler au moment de la fusion jusqu'à former une couche continue bouchant les pores en surface de la mousse ou du non-tissé, ce qu'il faut absolument éviter. A l'inverse, si les quantités appliquées sont significativement inférieures à 17 g/m$^2$, la force d'adhésion au niveau de l'interface couche de support/textile de verre risque d'être insuffisante et la Demanderesse a constaté que le produit fini présente alors des coefficients d'absorption considérablement moins bons, de l'ordre de 0,05 à 0,10.

Lorsque la couche adhésive (c) est formée par un adhésif thermofusible, le point de ramollissement de celui-ci est de préférence inférieur d'au moins 10 °C, en particulier d'au moins 15 °C et idéalement d'au moins 20 °C au point de ramollissement du polymère formant la couche de support (a). Il faut en effet éviter que la structure poreuse de celle-ci se modifie défavorablement sous l'influence de la chaleur et de la pression de contre-collage.

Lorsqu'on respecte l'ensemble des indications ci-dessus concernant le mode et les quantités d'application, la couche adhésive (c), dans le produit fini, est constituée d'un réseau de points et/ou de lignes s'étendant de façon homogène sur toute l'interface entre les couches (a) et (b). L'adjectif « homogène » a ici le sens de régulier à l'échelle macroscopique, et englobe à la fois des motifs ordonnés et aléatoires à l'échelle microscopique.

Le textile de verre formant la couche de surface (b) peut être une toile de verre (c'est-à-dire un tissé constitué de fils de chaîne et de trame) ou un voile (c'est-à-dire un non-tissé ou intissé). On peut également envisager une combinaison de ceux-ci, par exemple un non-tissé renforcé par une structure tissée. La présente invention n'englobe toutefois pas les textiles de verre tels que des feutres de verre à structure très lâche obtenus par aiguilletage. De tels textiles, lorsqu'ils ont une tenue mécanique satisfaisante, présentent en effet une épaisseur trop importante et, surtout, ne se prêtent généralement pas à l'application d'une peinture.

Le textile de verre est de préférence une toile de verre, c'est-à-dire un tissu obtenu à partir de fils de verre composés d'une multitude de filaments de verre (ou fils de base) ou dérivés de ces fils, notamment les assemblages de ces fils de base en stratifils (« roving » en anglais).

La toile ou le voile de verre peuvent éventuellement contenir une fraction relativement limitée, généralement inférieure à 20 % en poids, de préférence inférieure à 10 % en poids, de fibres constituées d'une matière organique. Ces autres fibres peuvent être des fibres naturelles telles que les fibres de soie, de laine, de bois, de cellulose, de coton ; des fibres synthétiques ou artificielles telles que les fibres de viscose ou de rayonne, de polyéthylène, de polypropylène, de poly(éthylène téréphtalate), de polystyrène, de poly(méthacrylate de méthyle), de polyamide, de poly(chlorure de vinyle), de polyacrylonitrile, de poly(acétate de vinyle), de poly(alcool de vinyle), de polyester, de poly(tétrafluoroéthylène) et d'aramide ; des fibres métalliques par exemple des fibres d'argent, de cuivre ou d'acier ; des fibres de carbone ; des fibres minérales, par exemple de basalte, de silice, d'alumine ou de céramique.

Le verre entrant dans la constitution des fils peut être de tout type, par exemple de type E, C, R ou AR (résistant aux alcalis). On préfère en particulier le verre E.

Le diamètre des filaments de verre constituants les fils peut varier dans une large gamme allant par exemple de 5 à 30 $\mu$m. La masse linéique des filaments peut être comprise entre 30 et 1500 tex.

Avantageusement, la toile de verre comprend, en chaîne, un fil de verre retordu (fil textile) et, en trame, un fil de verre sans torsion ayant subi un traitement visant à séparer les filaments de verre de manière à leur conférer du volume (fils « voluminisé »). La masse linéique des fils de chaîne et de trame varie de préférence de 50 à 500 tex.

De manière classique, la toile ou le voile à peindre sont enduits d'une composition d'apprêt qui maintient les fils et leur confère la rigidité qui convient pour que la pose sur le support final puisse être effectuée convenablement.

Les textiles de verre utilisés dans la présente invention sont connus dans la technique et disponibles sur le marché, par exemple sous la dénomination Novelio de la société Adfors. Ils présentent de préférence une masse surfacique comprise entre 80 et 450 g/m², en particulier entre 100 et 300 g/m² et encore plus préférentiellement entre 120 et 250 g/m².

La structure multi-couches de la présente invention peut comporter, en plus des trois couches (a), (b) et (c) décrites ci-dessus, une quatrième couche, appelée ci-après sous-couche (d), de préférence perméable à la vapeur d'eau et collée sur la face de la couche de support (a) opposée à celle en contact avec la couche de surface (b).

Cette sous-couche peut être par exemple un film en matière plastique, une feuille de papier, un film métallique perforé, un tissu, un non tissé ou une combinaison de ceux-ci.

Cette sous-couche est principalement destinée à faciliter l'encollage de la structure multicouche avant application sur les parois de la pièce dont il s'agit d'améliorer le confort acoustique. Cette sous-couche (d) peut bien entendu être pré-encollée.

Enfin, la structure multi-couches de la présente invention peut comporter une cinquième couche, appelée ci-après surcouche (e), formée par une couche de peinture appliquée sur la couche de surface (b).

Cette peinture peut être appliquée avant collage de la structure au mur, ou bien la structure multi-couches peut être peinte seulement après collage au mur.

La sur-couche de peinture (e) peut-être n'importe quelle peinture utilisée couramment pour la décoration de pièces d'habitation. Il peut s'agir de peintures acryliques à base aqueuse ou de peintures glycérophtaliques. La couche de peinture finale peut être microporeuse ou non. Elle est appliquée généralement avec un grammage inférieur à 600 g/m², de préférence à raison de 50 à 500 g/m², et en particulier à raison de 100 à 350 m²/g.

Comme expliqué en introduction, le choix des matériaux des différentes couches a permis d'obtenir des revêtements muraux présentant, à l'état peint, des coefficients d'absorption du son suffisants pour permettre leur classement en tant que revêtement absorbant acoustique selon la norme NF EN ISO 11654 (classes E). Ce classement peut être obtenu pour des épaisseurs exceptionnellement faibles. Les structures multicouches de la présente invention ont en effet une épaisseur globale qui n'excède pas 3 mm. Elle est comprise entre 1,5 et 3 mm, de préférence entre 1,7 et 2,8 mm.

Les revêtements minces de la présente invention se distinguent non seulement par leur bon coefficient d'absorption acoustique mais également par leur faible effusivité thermique, inférieure à 390 W/(m².K.s$^{1/2}$), voire inférieure à 200 W/(m².K.s$^{1/2}$), et par leur faible diffusivité thermique, comprise entre $0,9.10^7$ et $5.10^7$ m²/s, voire entre $0,9.107$ et $2.10^7$ m²/s.

Les revêtements selon l'invention permettent ainsi, malgré leur faible épaisseur, d'améliorer significativement à la fois le confort acoustique et le confort thermique d'une pièce.

Les structures multi-couches de la présente invention peuvent être fabriquées selon des procédés de contre-collage très similaires à des procédés connus et sur des installations existantes utilisées communément pour la fabrication des revêtements muraux.

Dans un tel procédé de fabrication, objet de la présente invention, on superpose dans l'ordre une structure en mousse de polymère organique (ou un non tissé en fibres de viscose), un voile d'adhésif thermofusible et un textile de verre, puis on soumet la structure ainsi formée, comportant au moins trois couches, à une température au moins égale au point de ramollissement de l'adhésif thermofusible, de préférence en appliquant une pression, par exemple par calandrage.

Une alternative possible à l'utilisation d'un voile thermofusible est l'application d'une composition adhésive en poudre ou liquide sur l'une des faces de la mousse (ou du non-tisse en fibres de viscose) ou du textile de verre. L'application peut se faire selon un motif ordonné (grille, réseau de points équidistants), par exemple par impression, ou bien selon un motif aléatoire, par exemple par application d'une poudre ou pulvérisation d'une composition adhésive liquide. Après application de la composition adhésive, la structure en mousse de polymère organique est mise en contact avec le textile de verre, de préférence sous pression et chauffage, de manière à coller le textile de verre fermement sur la structure en mousse de polymère organique.

Enfin, la présente invention a pour objet l'utilisation d'une structure multicouches telle que décrite ci-dessus à la fois pour l'amélioration du confort acoustique et thermique d'une pièce ou d'un bâtiment. Le procédé d'amélioration du confort acoustique comprend l'application d'une structure multicouches selon l'invention, de préférence par collage, sur une ou plusieurs parois internes de la dite pièce ou dudit bâtiment, en particulier sur les murs.

**Exemple1**

Toile de verre sur support en mousse

Une mousse de mélamine, commercialisée par la société Silentway, présentant une masse volumique de 10 $kg/m^3$ et une résistivité statique au passage de l'air de $1,6.10^4$ $N.s.m^{-4}$ est contre-collée sur une toile de verre à peindre présentant une masse surfacique de 220 $g/m^2$ et une résistivité statique au passage de l'air de $7,7.10^5$ $N.s.m^{-4}$.

Ce contre-collage se fait au moyen d'un voile d'adhésif thermofusible constitué de fibres bicomposants avec une âme en poly(éthylène téréphtalate) (PET) et une enveloppe en copolymère coPET, cette enveloppe ayant un point de ramollissement inférieur à celui de la partie centrale en homopolymère PET. Le voile d'adhésif thermofusible présente une masse surfacique de 25 $g/m^2$. Les trois couches sont superposées les unes aux autres et l'ensemble est collé par chauffage à une température d'environ 90 °C sous une pression de calandrage d'environ 0,5 bars. La structure à trois couches obtenue a une épaisseur totale de 3 mm. Son effusivité thermique et sa diffusivité thermique, déterminées par la méthode de la source plane dynamique, sont respectivement égales à 134 $W/(m^2.K.s^{1/2})$ et à $1,01.10^7$ $m^2/s$.

La structure tricouche est ensuite collée sur des plaques de plâtre BA13 à l'aide d'une colle vinylique (Ovalit Ultra, de la société Henkel) et peinte avec une peinture acrylique satinée (150 $g/m^2$). Une surface de 10,80 $m^2$ est ainsi utilisée pour les essais en chambre réverbérante (NF EN ISO 354) et le coefficient d'absorption acoustique, calculé selon NF EN ISO 11654, est de 0,15 ce qui permet un classement de cette structure tricouches dans la classe E.

**Exemple 2**

Toile de verre sur support non-tissé en viscose

On réalise un non-tissé constitué de fibres de viscose ayant une masse linéique de 3,3 dtex. Le non-tissé a une épaisseur (déterminée selon la norme E10 D45 1195 à une pression de 13,8 kPa) d'environ 2,8 mm et une masse surfacique de 250 $g/m^2$ (molleton A)

On réalise également deux non-tissés très similaires au molleton A mais en remplaçant 10 % en poids des fibres de viscose respectivement par 10 % en poids de fibres de polypropylène ayant une masse linéique de 3,3 dtex (molleton B) et par 10 % en poids de fibres de polyester ayant également une masse linéique de 3,3 dtex (molleton C).

Ces deux molletons B et C à fibres mixtes ont une épaisseur (déterminée selon la norme E10 D45 1195 à une pression de 13,8 kPa) de 2,9 mm et une masse surfacique de 250 $g/m^2$.

Chacun des molletons A, B et C ci-dessus est contre-collé sur une toile de verre à peindre présentant une masse surfacique de 220 $g/m^2$ et une résistivité statique au passage de l'air de $7,7.10^5$ $N.s.m^{-4}$.

Ce contre-collage se fait au moyen d'un voile d'adhésif thermofusible constitué de fibres bicomposants avec une âme en poly(éthylène téréphtalate) (PET) et une enveloppe en copolymère coPET, cette enveloppe ayant un point de ramollissement inférieur à celui de la partie centrale en homopolymère PET. Le voile d'adhésif thermofusible présente une masse surfacique de 25 $g/m^2$. Les trois couches sont superposées les unes aux autres et l'ensemble est collé par chauffage à une température d'environ 90 °C sous une pression de calandrage d'environ 0,5 bars. Les structures à trois couches obtenues ont une épaisseur totale de 3 mm environ.

Les structures tricouches obtenues sont ensuite collées sur des plaques de plâtre BA13 à l'aide d'une colle vinylique (Ovalit Ultra, de la société Henkel) et peintes avec une peinture acrylique satinée (150 $g/m^2$). Une surface de 10,80 $m^2$ est ainsi utilisée pour les essais en chambre réverbérante (NF EN ISO 354) et le coefficient d'absorption acoustique est calculé selon NF EN ISO 11654.

Le tableau ci-dessus présente le coefficient d'absorption acoustique ($\alpha_w$), ainsi que l'effusivité thermique et la diffusivité thermique des trois revêtements multi-couches ainsi obtenus, déterminées par la méthode de la source plane dynamique.

Pour comparaison, l'effusivité du plâtre nu BA13 est de 557,23 W/(m$^2$.K.s$^{1/2}$) et sa diffusivité de 2,9.10$^7$ m$^2$/s.

| Molleton formant la couche de support (a) | Epaisseur globale (mm) | $\alpha_w$ | Effusivité (W/(m$^2$.K.s$^{1/2}$)) | Diffusivité (m$^2$/s) |
|---|---|---|---|---|
| A (100 % viscose) | 3 | 0,15 | 170,71 | 0,93.10$^7$ |
| B (90% viscose, 10% polypropylène) | 3 | 0,15 | 153 | 0,94.10$^7$ |
| C (90% viscose, 10% polyester) | 3 | 0,15 | 137,4 | 1,1.10$^7$ |

On constate que l'ensemble des trois revêtements selon l'invention permet, pour une épaisseur globale ne dépassant pas 3 mm, de réduire significativement l'effusivité et la diffusivité des parois. On peut constater en outre qu'une faible fraction des fibres de viscose est remplacée avantageusement par des fibres synthétiques (polypropylène, polyester), ce remplacement se traduisant par une diminution de l'effusivité thermique mais également par une légère augmentation de la diffusivité.

**Revendications**

1.  Structure multicouches, présentant une épaisseur globale comprise entre 1,5 et 3,3 mm, de préférence entre 1,7 et 3,0 mm, comprenant

    (a) une couche de support formée par

    - une mousse de polymère organique présentant une porosité ouverte comprise entre 0,50 et 0,995, de préférence entre 0,80 et 0,97, en particulier entre 0,83 et 0,96, et encore plus particulièrement entre 0,87 et 0,95, ou par
    - un non-tissé en fibres de viscose ayant une masse surfacique comprise entre 150 g/m$^2$ et 500 g/m$^2$, de préférence entre 200 et 400 g/m$^2$, et en particulier entre 200 et 300 g/m$^2$,

    (b) une couche de surface formée par un textile de verre, présentant une résistance statique au passage de l'air, mesurée selon la norme ISO 9053, comprise entre 10$^5$ N.s.m$^{-4}$ et 10$^6$ N.s.m$^{-4}$, de préférence entre 5.10$^5$ N.s.m$^{-4}$ et 8,5.10$^5$ N.s.m$^{-4}$, en particulier entre 7.10$^5$ N.s.m$^{-4}$ et 8.10$^5$ N.s.m$^{-4}$,
    (c) à l'interface entre la couche de support (a) et la couche de surface (b), une couche adhésive discontinue présentant une masse surfacique comprise entre 17 et 60 g/m$^2$, de préférence entre 20 et 40 g/m$^2$, en particulier entre 21 et 30 g/m$^2$, et idéalement entre 22 et 27 g/m$^2$.

2.  Structure multicouches selon la revendication 1, **caractérisée par le fait que** la couche de support est une mousse de polymère organique et présente une masse volumique comprise entre 10 et 120 kg/m$^3$, de préférence entre 30 et 100 kg/m$^3$ et en particulier entre 50 et 90 kg/m$^3$.

3.  Structure multicouches selon la revendication 2, **caractérisée par le fait que** la couche de support (a) présente une résistance statique au passage de l'air, mesurée selon la norme ISO 9053, comprise entre 13 000 et 50 000 N.s.m$^{-4}$, de préférence entre 13 000 N.s.m$^{-4}$ et 20 000 N.s.m$^{-4}$, en particulier entre 14 000 et 18 000 N.s.m$^{-4}$.

4.  Structure multicouches selon la revendication 1, **caractérisée par le fait que** la couche de support (a) est un non-tissé en fibres de viscose et que les fibres de viscose ont une masse linéique comprise entre 1 et 20 dtex, de préférence entre 2 et 10 dtex et en particulier entre 3 et 8 dtex.

5.  Structure multicouches selon la revendication 4, **caractérisée par le fait que** la couche de support (a) contient au moins 75 % en poids, de préférence au moins 80 % en poids, en particulier au moins 90 % en poids de fibres de viscose, et au plus 25 % en poids, de préférence au plus 20 % en poids, et en particulier au plus 10 % en poids de fibres synthétiques, ces pourcentages étant rapportés à la somme des fibres de viscose et des fibres synthétiques.

6.  Structure multi-couches selon la revendication 5, **caractérisée par le fait que** les fibres synthétiques sont des fibres en polymère thermoplastique, choisies de préférence parmi les fibres de polyoléfines et les fibres de polyester.

7.  Structure multi-couches selon l'une quelconque des revendications précédentes, **caractérisée par le fait que** la couche adhésive (c) comprend un adhésif thermofusible ayant un point de ramollissement inférieur d'au moins 10 °C, de préférence d'au moins 15 °C et idéalement d'au moins 20 °C au point de ramollissement du polymère formant la couche de support (a).

8.  Structure multi-couches selon l'une quelconque des revendications précédentes, **caractérisée par le fait que** la couche adhésive (c) est constituée d'un réseau de points et/ou de lignes s'étendant de façon homogène sur toute l'interface entre les couches (a) et (b).

9.  Structure multi-couches selon l'une quelconque des revendications précédentes, **caractérisée par le fait que** la couche de surface (b) est une toile de verre ou un non-tissé de fibres de verre.

10. Structure multi-couches selon l'une quelconque des revendications précédentes, **caractérisée par le fait que** la couche de surface (b) présente une masse surfacique comprise entre 80 et 450 g/m$^2$, de préférence entre 100 et 300 g/m$^2$ et en particulier entre 120 et 250 g/m$^2$.

11. Structure multi-couches selon l'une quelconque des revendications précédentes, **caractérisée par le fait qu'**elle comporte en outre une sous-couche (d), de préférence perméable à la vapeur d'eau, collée sur la face de la couche de support (a) opposée à celle en contact avec la couche de surface (b).

12. Structure multi-couches selon l'une quelconque des revendications précédentes, **caractérisée par le fait qu'**elle comprend en outre une sur-couche de peinture (e) appliquée sur la couche de surface (b).

13. Structure multi-couches selon l'une quelconque des revendications précédentes, **caractérisée par le fait qu'**elle présente une effusivité thermique inférieure à 390 W/(m$^2$.K.s$^{1/2}$), de préférence inférieure à 200 W/(m$^2$.K.s$^{1/2}$), et une diffusivité thermique comprise entre $0,9.10^7$ et $5.10^7$ m$^2$/s, de préférence entre $0,9.10^7$ et $2.10^7$ m$^2$/s.

14. Procédé d'amélioration du confort acoustique et du confort thermique d'une pièce ou d'un bâtiment, comprenant l'application d'une structure selon l'une quelconque des revendications précédentes, de préférence par collage, sur une ou plusieurs parois internes de la dite pièce ou dudit bâtiment.

15. Procédé de fabrication d'une structure multi-couches selon l'une quelconque des revendications 1 à 13, **caractérisé par le fait qu'**il comprend la superposition d'une structure en mousse de polymère organique ou d'un non-tissé en fibres de viscose, d'un voile d'adhésif thermofusible et d'un textile de verre, puis le chauffage de la structure comportant au moins trois couches ainsi formée à une température au moins égale au point de ramollissement de l'adhésif thermofusible.

16. Procédé de fabrication d'une structure multi-couches selon l'une quelconque des revendications 1 à 13, **caractérisé par le fait qu'**il comprend

    - l'application d'une composition adhésive selon un motif ordonné ou aléatoire, sur un non-tissé en fibres de viscose ou sur une structure en mousse de polymère organique, d'une part, et/ou sur un textile de verre d'autre part,
    - la mise en contact du non-tissé en fibres de viscose ou de la structure en mousse de polymère organique avec le textile de verre, de manière à coller le textile de verre sur le non-tissé en fibres de verre ou sur la structure en mousse de polymère organique.

**Patentansprüche**

1.  Mehrschichtenstruktur mit einer Gesamtdicke zwischen 1,5 und 3,3 mm, vorzugsweise zwischen 1,7 und 3,0 mm, umfassend

    (a) eine Trägerschicht, gebildet aus

        - einem organischen Polymerschaum, der eine offene Porosität zwischen 0,50 und 0,995, vorzugsweise zwischen 0,80 und 0,97, insbesondere zwischen 0,83 und 0,96 und ganz besonders bevorzugt zwischen 0,87 und 0,95 aufweist, oder aus
- einem Vlies aus Viskosefasern mit einer flächenbezogenen Masse zwischen 150 g/m$^2$ und 500 g/m$^2$, vorzugsweise zwischen 200 und 400 g/m$^2$ und insbesondere zwischen 200 und 300 g/m$^2$,

(b) eine Oberflächenschicht, gebildet aus einem Glasfasertextil, mit einem statischen Luftströmungswiderstand, gemessen nach der Norm ISO 9053, zwischen 10$^5$ N.s.m$^{-4}$ und 10$^6$ N.s.m$^{-4}$, vorzugsweise zwischen 5.10$^5$ N.s.m$^{-4}$ und 8,5.10$^5$ N.s.m$^{-4}$, insbesondere zwischen 7.10$^5$ N.s.m$^{-4}$ und 8.10$^5$ N.s.m$^{-4}$,
(c) an der Grenzfläche zwischen der Trägerschicht (a) und der Oberflächenschicht (b), einen diskontinuierlichen Klebstoffauftrag mit einer flächenbezogenen Masse zwischen 17 und 60 g/m$^2$, vorzugsweise zwischen 20 und 40 g/m$^2$, insbesondere zwischen 21 und 30 g/m$^2$ und idealerweise zwischen 22 und 27 g/m$^2$.

2. Mehrschichtenstruktur nach Anspruch 1, **dadurch gekennzeichnet, dass** die Trägerschicht ein organischer Polymerschaum ist und eine Dichte zwischen 10 und 120 kg/m$^3$, vorzugsweise zwischen 30 und 100 kg/m$^3$ und insbesondere zwischen 50 und 90 kg/m$^3$ aufweist.

3. Mehrschichtenstruktur nach Anspruch 2, **dadurch gekennzeichnet, dass** die Trägerschicht (a) einen statischen Luftströmungswiderstand, gemessen nach der Norm ISO 9053, zwischen 13 000 und 50 000 N.s.m$^{-4}$, vorzugsweise zwischen 13 000 N.s.m$^{-4}$ und 20 000 N.s.m$^{-4}$, insbesondere zwischen 14 000 und 18 000 N.s.m$^{-4}$ aufweist.

4. Mehrschichtenstruktur nach Anspruch 1, **dadurch gekennzeichnet, dass** die Trägerschicht (a) ein Vlies aus Viskosefasern ist und dass die Viskosefasern eine Feinheit zwischen 1 und 20 dtex, vorzugsweise zwischen 2 und 10 dtex und insbesondere zwischen 3 und 8 dtex aufweisen.

5. Mehrschichtenstruktur nach Anspruch 4, **dadurch gekennzeichnet, dass** die Trägerschicht (a) mindestens 75 Gew.-%, vorzugsweise mindestens 80 Gew.-%, insbesondere mindestens 90 Gew.-% Viskosefasern und höchstens 25 Gew.-%, vorzugsweise höchstens 20 Gew.-% und insbesondere höchstens 10 Gew.-% Synthesefasern enthält, wobei diese prozentualen Gehalte auf die Summe von Viskosefasern und Synthesefasern bezogen sind.

6. Mehrschichtenstruktur nach Anspruch 5, **dadurch gekennzeichnet, dass** die Synthesefasern Fasern aus thermoplastischem Polymer sind, die vorzugsweise aus den Polyolefinfasern und den Polyesterfasern gewählt sind.

7. Mehrschichtenstruktur nach einem der vorhergehenden Ansprüche, **dadurch gekennzeichnet, dass** der Klebstoffauftrag (c) einen Schmelzklebstoff umfasst, der einen Erweichungspunkt aufweist, der mindestens 10 °C, vorzugsweise mindestens 15 °C und idealerweise mindestens 20 °C niedriger als der Erweichungspunkt des die Trägerschicht (a) bildenden Polymers ist.

8. Mehrschichtenstruktur nach einem der vorhergehenden Ansprüche, **dadurch gekennzeichnet, dass** der Klebstoffauftrag (c) aus einem Netz von Punkten und/oder Linien besteht, das sich gleichmäßig über die gesamte Grenzfläche zwischen den Schichten (a) und (b) erstreckt.

9. Mehrschichtenstruktur nach einem der vorhergehenden Ansprüche, **dadurch gekennzeichnet, dass** die Oberflächenschicht (b) ein Glasgewebe oder ein Glasfaservlies ist.

10. Mehrschichtenstruktur nach einem der vorhergehenden Ansprüche, **dadurch gekennzeichnet, dass** die Oberflächenschicht (b) eine flächenbezogene Masse zwischen 80 g/m$^2$ und 450 g/m$^2$, vorzugsweise zwischen 100 und 300 g/m$^2$ und insbesondere zwischen 120 und 250 g/m$^2$ aufweist.

11. Mehrschichtenstruktur nach einem der vorhergehenden Ansprüche, **dadurch gekennzeichnet, dass** sie außerdem eine Zwischenschicht (d), vorzugsweise wasserdampfdurchlässig, umfasst, die auf die Seite der Trägerschicht (a) geklebt ist, die jener, die mit der Oberflächenschicht (b) in Kontakt ist, gegenüberliegt.

12. Mehrschichtenstruktur nach einem der vorhergehenden Ansprüche, **dadurch gekennzeichnet, dass** sie außerdem eine Farb-Deckschicht (e) umfasst, die auf die Oberflächenschicht (b) aufgebracht ist.

13. Mehrschichtenstruktur nach einem der vorhergehenden Ansprüche, **dadurch gekennzeichnet, dass** sie einen Wärmeeindringkoeffizienten kleiner als 390 W/(m$^2$.K.s$^{1/2}$), vorzugsweise kleiner als 200 W/(m$^2$.K.s$^{1/2}$), und eine Temperaturleitfähigkeit zwischen 0,9.10$^7$ und 5.10$^7$ m$^2$/s, vorzugsweise zwischen 0,9.10$^7$ und 2.10$^7$ m$^2$/s, aufweist.

**14.** Verfahren zur Verbesserung des akustischen Komforts und des Wärmekomforts eines Zimmers oder eines Gebäudes, umfassend das Aufbringen einer Struktur nach einem der vorhergehenden Ansprüche, vorzugsweise durch Kleben, auf eine oder mehrere Innenwände des Zimmers oder des Gebäudes.

**15.** Verfahren zur Herstellung einer Mehrschichtenstruktur nach einem der Ansprüche 1 bis 13, **dadurch gekennzeichnet, dass** es die Überlagerung einer Struktur aus organischem Polymerschaum oder aus einem Vlies aus Viskosefasern, aus einem Schmelzklebstoff-Schleier und einem Glasfasertextil, dann das Erwärmen der auf diese Weise gebildeten Struktur, die mindestens drei Schichten umfasst, auf eine Temperatur, die mindestens gleich dem Erweichungspunkt des Schmelzklebstoffs ist, umfasst.

**16.** Verfahren zur Herstellung einer Mehrschichtenstruktur nach einem der Ansprüche 1 bis 13, **dadurch gekennzeichnet, dass** es Folgendes umfasst:

- Aufbringen einer Klebstoffzusammensetzung gemäß einem geordneten oder zufälligen Muster auf ein Vlies aus Viskosefasern oder auf eine Struktur aus organischem Polymerschaum einerseits und/oder auf ein Glasfasertextil andererseits,
- Inkontaktbringen des Vlieses aus Viskosefasern oder der Struktur aus organischem Polymerschaum mit dem Glasfasertextil, um das Glasfasertextil auf das Vlies aus Glasfasern oder auf die Struktur aus organischem Polymerschaum zu kleben.

**Claims**

**1.** A multilayer structure, having an overall thickness of between 1.5 and 3.3 mm, preferably between 1.7 and 3.0 mm, comprising:

(a) a support layer formed by

- an organic polymer foam having an open porosity between 0.50 and 0.995, preferably between 0.80 and 0.97, in particular between 0.83 and 0.96, and more particularly still between 0.87 and 0.95, or by
- a viscose fiber nonwoven having a mass per unit area of between 150 $g/m^2$ and 500 $g/m^2$, preferably between 200 and 400 $g/m^2$, and in particular between 200 and 300 $g/m^2$,

(b) a surface layer formed by a glass textile, having a static air flow resistance, measured according to the standard ISO 9053, of between $10^5$ N.s.m$^{-4}$ and $10^6$ N.s.m$^{-4}$, preferably between $5 \times 10^5$ N.s.m$^{-4}$ and $8.5 \times 10^5$ N.s.m$^{-4}$, in particular between $7 \times 10^5$ N.s.m$^{-4}$ and $8 \times 10^5$ N.s.m$^{-4}$,
(c) at the interface between the support layer (a) and the surface layer (b), a discontinuous adhesive layer having a mass per unit area of between 17 and 60 $g/m^2$, preferably between 20 and 40 $g/m^2$, in particular between 21 and 30 $g/m^2$, and ideally between 22 and 27 $g/m^2$.

**2.** The multilayer structure as claimed in claim 1, **characterized in that** the support layer is an organic polymer foam and has a density of between 10 and 120 $kg/m^3$, preferably between 30 and 100 $kg/m^3$ and in particular between 50 and 90 $kg/m^3$.

**3.** The multilayer structure as claimed in claim 2, **characterized in that** the support layer (a) has a static air flow resistance, measured according to the standard ISO 9053, of between 13 000 and 50 000 N.s.m$^{-4}$, preferably between 13 000 N.s.m$^{-4}$ and 20 000 N.s.m$^{-4}$, in particular between 14 000 and 18 000 N.s.m$^{-4}$.

**4.** The multilayer structure as claimed in claim 1, **characterized in that** the support layer (a) is a viscose fiber nonwoven and **in that** the viscose fibers have a linear density of between 1 and 20 dtex, preferably between 2 and 10 dtex and in particular between 3 and 8 dtex.

**5.** The multilayer structure as claimed in claim 4, **characterized in that** the support layer (a) contains at least 75% by weight, preferably at least 80% by weight, in particular at least 90% by weight of viscose fibers, and not more than 25% by weight, preferably not more than 20% by weight, and in particular not more than 10% by weight of synthetic fibers, these percentages being based on the sum of the viscose fibers and of the synthetic fibers.

**6.** The multilayer structure as claimed in claim 5, **characterized in that** the synthetic fibers are thermoplastic polymer fibers selected preferably from polyolefin fibers and polyester fibers.

7. The multilayer structure as claimed in any one of the preceding claims, **characterized in that** the adhesive layer (c) comprises a hot-melt adhesive having a softening point at least 10°C, preferably at least 15°C and ideally at least 20°C below the softening point of the polymer forming the support layer (a).

8. The multilayer structure as claimed in any one of the preceding claims, **characterized in that** the adhesive layer (c) consists of a network of points and/or lines extending homogeneously over the entire interface between the layers (a) and (b).

9. The multilayer structure as claimed in any one of the preceding claims, **characterized in that** the surface layer (b) is a glass cloth or a glass fiber nonwoven.

10. The multilayer structure as claimed in any one of the preceding claims, **characterized in that** the surface layer (b) has a mass per unit area of between 80 and 450 g/m$^2$, preferably between 100 and 300 g/m$^2$ and in particular between 120 and 250 g/m$^2$.

11. The multilayer structure as claimed in any one of the preceding claims, **characterized in that** it further comprises an underlayer (d), preferably permeable to water vapor, adhesively bonded to the face of the support layer (a) opposite the face in contact with the surface layer (b).

12. The multilayer structure as claimed in any one of the preceding claims, **characterized in that** it further comprises a paint overlayer (e) applied to the surface layer (b).

13. The multilayer structure as claimed in any one of the preceding claims, **characterized in that** it has a thermal effusivity of less than 390 W/(m$^2$.K.s$^{1/2}$), preferably less than 200 W/(m$^2$.K.s$^{1/2}$), and a thermal diffusivity of between $0.9 \times 10^7$ and $5 \times 10^7$ m$^2$/s, preferably between $0.9 \times 10^7$ and $2 \times 10^7$ m$^2$/s.

14. A process for improving the acoustic comfort and the thermal comfort of a room or of a building, comprising the application of a structure as claimed in any one of the preceding claims, preferably by adhesive bonding, to one or more internal walls of said room or of said building.

15. A process for manufacturing a multilayer structure as claimed in any one of claims 1 to 13, **characterized in that** it comprises the superposition of an organic polymer foam structure or of a viscose fiber nonwoven, of a web of hot-melt adhesive and of a glass textile, then the heating of the structure comprising at least three layers thus formed to a temperature at least equal to the softening point of the hot-melt adhesive.

16. A process for manufacturing a multilayer structure as claimed in any one of claims 1 to 13, **characterized in that** it comprises

- the application of an adhesive composition in an ordered or random pattern to a viscose fiber nonwoven or to an organic polymer foam structure, on the one hand, and/or to a glass textile, on the other hand,
- the contacting of the viscose fiber nonwoven or of the organic polymer foam structure with the glass textile, so as to adhesively bond the glass textile to the viscose fiber nonwoven or to the organic polymer foam structure.

## RÉFÉRENCES CITÉES DANS LA DESCRIPTION

**Documents brevets cités dans la description**

- CH 650196
- FR 2672908
- FR 0061369
- EP 0271681 A
- US 5681408 A
- US 4283457 A

**Littérature non-brevet citée dans la description**

- **DE L.L. BERANEK.** *J. Acoust. Soc. Am.,* 1942, vol. 13, 248-260